# EUROPEAN PATENT APPLICATION

(11) **EP 0 755 630 A1**
(43) Date of publication of application: **29.01.1997**
(21) Application number: 95111932.0
(22) Date of filing: 28.07.1995
(51) Int. Cl.: A23C 19/028, A23C 19/082

(54) **Acidified ultrafiltration concentrates as raw material for the production of processed cheese**

(71) Applicant: KRAFT JACOBS SUCHARD R & D, INC., Rye Brook, New York 10573 (US)
(72) Inventor: Simbuerger, Stephan, 81369 München (DE); Wolfschoon, Alan Frederick, 85354 Freising (DE); Kempter, Klaus, 85356 Freising (DE); Rose, Mehran, 81825 München (DE); Marder, Uwe, 28865 Lilienthal (DE)
(74) Representative: Weiss, Wolfgang, Dipl.-Chem. Dr.

(57) **Abstract**

The present invention refers to the use of an acidified ultrafiltration concentrate or retentate with a pH below 5.6 as a cheese base for the manufacture of processed cheese. Further, the present invention refers to a novel cheese base and a method for the manufacture of processed cheese using said novel cheese base.

## Description

The present invention refers to the use of an acidified ultrafiltration concentrate or retentate as a cheese base for the manufacture of processed cheese. Further, the present invention refers to a novel cheese base and a method for the manufacture of processed cheese using said novel cheese base.

Processed cheese is usually manufactured by blending ground or shredded natural cheeses of different types, sources and degrees of maturity with emulsifying agents, adding water, thermal processing, optionally homogenising, packaging, cooling and storing the finished product. In addition to natural cheeses other dairy and non-dairy ingredients may be included in the blend.

Recently, the cheese manufacturers have been trying to replace natural cheese at least partially by other dairy products as component of the cheese base. For example, white cheese and similar varieties are made by coagulating hot milk by acidification to pH 5.5 (Kalab et al., 1985, Food Microstruct. 4, 89; Kalab et al., 1988, Food Microstruct. 7, 83; Fox, in Cheese: Chemistry, Physics and Microbiology, Vol. 2, Major Cheese Groups, ed. T. F. Fox, Elsevier Applied Sci. Publishers, London, pp. 311). The casein particles of these cheeses have a characteristic core- and shell structure, which is very stable and withstands the conditions of cheese processing.

Other ingredients which can replace natural cheese are so-called cheese bases made from retentates obtained by ultrafiltration and diafiltration of milk or from milk fortified with milk proteins. Tamime et al., 1990, Food Struct. 9, 23, reported that a treatment of the coagulum with a proteolytic enzyme gave a cheese base having an open structure. Processed cheese made with a high proportion of said cheese base and processed cheeses made from combinations of said cheese base with very young ripened cheese had granular structures.

Rosenau, 1983, Energy Management and Membrane Technology in Food and Dairy Processing, American Society of Agricultural Engineers, Chicago, USA, pp. 73, developed a method for a successful pilot plant production of a processed cheese based on dairy, non-cheese components, which were obtained by acidifying skim milk with HCl to pH 4.6, separating the coagulum and processing it in the usual way with emulsifying agents and other additives.

DE-A-32 24 364 refers to a method for the manufacture of cheese base, wherein milk is thickened by ultrafiltration in combination with diafiltration and evaporation, wherein prior to the evaporation the ultrafiltration retentate is inocculated with a bacterial culture which leads to an acidification after evaporation and packaging. In this document it is stated that ultrafiltration of milk alone is not suitable for the manufacture of solid cheese because it is not possible to obtain a sufficiently high dry matter content by ultrafiltration and because the lactose content in the retentate becomes too high, whereby a too low pH-value has been obtained during the ripening.

GB-patent 13 62 502 refers to a process for the production of dry milk protein products, wherein a milk product containing precipitated casein is adjusted to below the isoelectric point of casein by the addition of an acidified milk derivative, then brought into dispersion and/or solution and thereafter, optionally after the concentration with regard to the protein content, is dried. The resulting dried product has a lactose content of more than 20% and thus is not suitable for the manufacture of processed cheese.

However, all above-mentioned methods for the manufacture of processed cheese using natural cheese substitutes have not yet been applied in a large scale manner because it was found that they involve several major disadvantages. These disadvantages consist particularly in the fact that the obtaining of the cheese base involves too many efforts and the resulting cheese base partially exhibits unsatisfactory features with regard to texture and processibility, so that a substitution of natural cheese is only possible to a very small extent in the manufacture of processed cheese.

The object underlying the present invention thus consisted in making available a new cheese base comprising a non-cheese dairy product as a replacement for natural cheese overcoming at least some of the disadvantages of the prior art. Particularly, it should be possible to produce this cheese base in a quick and simple manner involving low costs and to use it in high amounts in the manufacture of processed cheese.

Accordingly, a subject-matter of the present invention is the use of an acidified ultrafiltration retentate from a dairy milk starting material as a cheese base for the manufacture of processed cheese, wherein the pH of the retentate is below a value of 5.6.

Surprisingly, a cheese base is obtained, which can replace the natural cheese to up to 100% in the manufacture of processed cheese, by means of combining a simple ultrafiltration step (without diafiltration and evaporation) with an acidification to a pH of less than 5.6.

The ultrafiltration retentate can be obtained from dairy milk starting material, e.g. fresh milk, skim milk concentrate, cream, or mixtures thereof. The acidification may take place before and/or after the ultrafiltration.

The pH-value of the resulting cheese base is below pH 5.6, preferably in the range from 2.5 to 5.5, more preferably in the range of 3.0 to 5.0, and most preferably in the range from 3.8 to 4.6. Around pH 2.5 the retentate becomes soft and around pH 5.6 the retentate becomes hard, which makes working up difficult. For spread cheese a lower pH and for slice cheese a higher pH is preferred.

The acidification may be carried out by adding a food-grade acid, which is preferably selected from the group consisting of lactic acid, citric acid, sorbic acid, phosphoric acid and combinations thereof. Lactic acid, citric acid and combinations thereof are especially preferred. Alternatively, the acidification may be carried out by adding an acidifying bacterial culture and ripening the product to obtain a desired pH-value. Furthermore, the acidification may be carried out by adding both a food grade acid and a bacterial culture.

The ultrafiltration retentate has a dry matter content of preferably from 30 to 50 wt.-%. Especially preferred is a range of 35 to 46 wt.-%. The lower the dry matter content, the lower is usually the proportion of the ultrafiltration retentate in the cheese base used for the manufacture of the processed cheese.

The fat content of the acidified ultrafiltration concentrate preferably amounts from 15 to 30 wt.-%, particularly preferred is a range from 18 to 25 wt.-%. The water content in the fat-free cheese base is preferably 50 to 80 wt.-%, especially preferably ≧ 73 wt.-%.

The ultrafiltration step is carried out in a known manner, usually at a temperature of from 45°C to 55°C, e.g. at about 50°C.

In a preferred embodiment of the present invention, a heat treatment step is carried out after the ultrafiltration step. Preferably, the heat treatment comprises heating the ultrafiltration retentate from 1 to 10 min. at a temperature of from 70°C to 95°C, e.g. 5 min. at 90°C. The heat treatment step may result in a better consistency of the final product, i.e. the product can hold more water. Preferably, the heat treatment step is carried out after ultrafiltration and acidification, e.g. directly before the use of the retentate in the manufacture of processed cheese.

Optionally, after the ultrafiltration step a mechanical treatment step, e.g. shearing can be carried out.

A further subject-matter of the present invention is a novel cheese base comprising an acidified ultrafiltration retentate from a dairy milk starting material, wherein the pH of the retentate is below 5.6, preferably from 2.5 to 5.5, and more preferably from 3.0 to 5.0, and most preferably from 3.8 to 4.6.

The cheese base may comprise a food-grade acid selected from the group consisting of lactic acid, citric acid, sorbic acid, phosphoric acid and combinations thereof in a suitable amount to obtain the desired pH. On the other hand, the cheese base may comprise an acidifying bacterial culture.

Still a further subject-matter of the present invention is a method for the manufacture of processed cheese, wherein a cheese base as defined above is used as a starting material, optionally in combination with other cheese bases and/or natural cheese. Preferably, the cheese base according to the present invention is used in an amount of at least 30 wt.-% and more preferably of at least 80 wt.-% based on the total weight of cheese base starting material. Most preferably the cheese base according to the present invention is used in an amount of 85 to 100 wt.-%.

In addition to the cheese base, the mixture which is used in the manufacture of processed cheese may contain other components which are usually employed in the prior art, such as milk protein ingredients, fat ingredients, preservatives, colouring agents, flavouring agents, water, salt, binders, vegetables and spices, muscle food ingredients and emulsifying agents. These components may be blended with the cheese base and worked up by known methods, such as described by Caric, M. (1991), Encyclopedia of Food Science and Technology, Vol. III, ed. Y.H. Hui, John Wiley and Sons, New York (1991), pp. 2161-2173 and Caric, M. and Kalab, M. in Cheese: Chemistry Physics and Microbiology, Vol. 2, ed. P.F. Fox, Chapman & Hall, London (1993) (second edition), pp. 467-505, which are herein incorporated by reference.

Examples of milk protein ingredients which may be added to the processed cheese blend are skim milk powder, whey powder, whey protein concentrate, co-precipitates and previously processed cheese (rework) . Examples of fat ingredients are cream, butter, butter oil or vegetable oil. Examples of binders are locust bean gum, pectin and starch. Examples of vegetables and spices are celery, mushrooms, mustard, onions, garlic, paprica, pepper, chive, tomatoes, parsley, rosemary, thyme and basil. The vegetables and spices may be used in the form of minced pieces or essences, as desired. Examples of muscle food ingredients are ham, salami or fish.

As emulsifying agents usually melting salts, such as phosphates, polyphosphates and citrates may be used. When using the cheese base according to the present invention the total amount of emulsifying salt solids should fall in the range of 2.2 to 2.5 wt.-% of the finished product.

Furthermore, the present invention will be explained by the following examples:

### Example 1

### Manufacture of a processed cheese spread

A mixture of skim milk concentrate (30% dry matter) and cream (36.3% dry matter, 30% fat content) was subjected to an ultrafiltration step at 50°C. The retentate was acidified to pH values in the range of 3.8 to 4.6 with lactic acid.

The resulting acidified ultrafiltration retentates were used as a cheese base in the manufacture of spreads with herbs. A replacement of 100% of natural cheese was possible.

The acidified ultrafiltration concentrates were mixed with milk protein ingredients (butter, skim milk powder, acid casein), sodium chloride, emulsifying salts, spices (oninons, garlic, parsley, celery, chive, rosemary, thyme and basil) and water to give mixtures having a solid content of 41% and a fat content of 15%. From these mixtures processed cheese spreads having excellent properties with regard to texture and taste were produced.

Slices with the processed cheese spreads as prepared above were preferred 55:45 versus a standard product in a test.

### Example 2

### Manufacture of processed cheese slice

The acidified ultrafiltration retentates of example 1 were combined with milk protein ingredients (rennet casein, butter, whey), shredded natural cheese (mature cheddar in an amount of 12 wt.-% based on the total solids weight of ultrafiltration retentate and natural cheese), emulsifying agent, sodium chloride, potassium sorbate and water. The resulting products had a solid content of 47.5% and a fat content of 19.25%. The blends were processed to give processed cheese slices having excellent properties.

## Claims

1. Use of an acidified ultrafiltration retentate from a dairy milk starting material as a cheese base for the manufacture of processed cheese, wherein the pH of the retentate is below 5.6.

2. Use according to claim 1, wherein the pH of the retentate is from 2.5 to 5.5.

3. Use according to claim 1, wherein the pH is from 3.0 to 5.0.

4. Use according to any one of claims 1-3, wherein the acidification is carried out by adding a food-grade acid.

5. Use according to any one of claims 1-3, wherein the acidification is carried out by adding an acidifying bacterial culture.

6. Use according to any one of claims 1-5, wherein the retentate has a dry matter content of from 30 to 50 weight percent.

7. Use according to claim 6, wherein the dry matter content is from 35 to 46 weight percent.

8. Use according to any one of claims 1-7, wherein the retentate has a fat content of from 15 to 30 weight percent.

9. Use according to claim 8, wherein the fat content is from 18 to 25 weight percent.

10. Use according to any one of claims 1-9, wherein the retentate has a water content in a range from 50 to 80 weight percent based on the weight of the fat-free cheese base.

11. Use according to claim 4, wherein the food-grade acid is selected from the group consisting of lactic acid, citric acid, sorbic acid, phosphoric acid and combinations thereof.

12. Use according to any one of claims 1-11, wherein the acidification is carried out before the ultrafiltration step.

13. Use according to any one of claims 1-11, wherein the acidification is carried out after the ultrafiltration step.

14. Use according to any one of claims 1-13, wherein after the ultrafiltration step a heat treatment step is carried out.

15. Use according to claim 14, wherein the heat treatment step comprises heating from 1 to 10 min. at a temperature of from 70 to 95°C.

16. Use according to any one of claims 1-15, wherein after the ultrafiltration step a mechanical treatment step is carried out.

17. Use according to claim 16, wherein the mechanical treatment step comprises shearing.

18. Use according to any one of claims 1-17, wherein the dairy milk starting material is selected from the group consisting of cream, skim milk concentrate, milk and combinations thereof.

19. A cheese base comprising an acidified ultrafiltration retentate from a dairy milk starting material, wherein the pH of the retentate is below 5.6.

20. The cheese base according to claim 19, wherein the pH of the retentate is from 2.5 to 5.5.

21. The cheese base according to claim 20, wherein the pH is from 3.0 to 5.0.

22. The cheese base according to any one of claims 19-21 comprising a food-grade acid selected from the group consisting of lactic acid, citric acid, sorbic acid, phosphoric acid and combinations thereof.

23. The cheese base according to any one of claims 19-21 comprising an acidifying bacterial culture.

24. A method for the manufacture of processed cheese, wherein a cheese base according to any one of the claims 19-23 is used.

25. The method according to claim 24, wherein said cheese base is used in an amount of at least 30 weight percent based on the total weight of the cheese base starting material.

26. The method according to claim 25, wherein said cheese base is used in an amount of at least 80 weight percent based on the total weight of the cheese base starting material.

27. The method according to claim 26, wherein said cheese base is used in an amount of from 85 to 100 weight percent.
